# FASCICULE DE BREVET EUROPEEN

(11) **EP 2 479 366 B1**
(45) Date de publication et mention de la délivrance du brevet: **30.12.2020**
(21) Numéro de dépôt: 12151804.7
(22) Date de dépôt: 19.01.2012
(51) Int. Cl.: E05D 15/10

(54) **Dispositif d'obturation d'une baie et véhicule automobile correspondant**
Schliessvorrichtung einer Öffnung eines Kraftfahrzeugs
Device for closing an opening in a vehicle

(30) Priorité: 19.01.2011 FR 1150433
(43) Date de publication de la demande: 25.07.2012
(73) Titulaire: Advanced Comfort Systems France SAS - ACS France, 79302 Bressuire Cedex (FR)
(72) Inventeur: Maltaverne, Guy, 79300 Bressuire (FR); Giret, Frédéric, 79300 Bressuire (FR); Desbois, Mickaël, 79200 Partenay (FR); Gerbeau, Serge, 79300 Saint Sauveur (FR)
(74) Mandataire: Vidon Brevets & Stratégie

(56) Documents cités:
- WO-A1-2007/139355
- WO-A1-2009/074625

## Description

### 1. Domaine de l'invention

Le domaine de l'invention est celui des baies définies dans une paroi et/ou un châssis d'une structure, notamment de véhicules automobiles. Plus précisément, l'invention concerne les dispositifs d'obturation d'une baie ménagée dans un élément de structure, par exemple dans la carrosserie d'un véhicule, notamment le pavillon ou une paroi latérale, ou dans une portière du véhicule, et comprenant une partie fixe et une partie mobile par rapport à cette partie fixe, de façon coulissante, et susceptible de libérer ou de fermer une ouverture en offrant un aspect affleurant, vu de l'extérieur. De tels dispositifs, développés depuis plusieurs années par le titulaire de la présente demande, sont notamment connus sous le terme "baie flush".

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier peut présenter une partie interne et une partie externe, qui viennent pincer simultanément les bords de la glace et de l'ouverture ménagée dans la carrosserie, avec une garniture d'étanchéité. Selon une autre approche, le cadre peut être collé aux bords de la carrosserie.

La technique la plus couramment répandue pour l'ouverture et la fermeture d'une vitre de portière est de rendre celle-ci mobile verticalement dans son propre plan, en la faisant pénétrer ou sortir du caisson ou de la garniture de la portière. On connaît également des panneaux coulissants horizontalement, le long de rails formés dans un cadre.

Cette technique est aujourd'hui couramment utilisée, et des solutions pour l'automatiser sont connues. L'équipement des automobiles en vitres électriques est aujourd'hui très répandu.

Cette technique présente cependant de nombreux inconvénients relatifs, notamment, aux problèmes d'étanchéité et/ou en termes d'esthétique.

Une autre technique a donc été proposée par le titulaire de la présente demande de brevet. Le principe de cette technique est notamment décrite dans les documents de brevet EP-0 778 168 et EP-0 857 844. Le dispositif d'obturation (appelé par la suite "baie flush") présenté dans ces documents comprend une structure fixe et une partie, ou panneau coulissant, mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie flush peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP-1 022 172. On résout ainsi la plupart des problèmes d'étanchéité identifiés plus haut. La même approche peut aussi être utilisée pour réaliser des pavillons, et notamment des pavillons vitrés munis d'une ouverture.

La même approche peut être adaptée aux pavillons, et notamment aux pavillons vitrés, pour fournir un toit ouvrant affleurant ou toit ouvrant flush. Un exemple d'un tel toit ouvrant est décrit dans le document EP 09 305888, non encore publié.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Pour assurer un coulissement de la partie mobile, constituée généralement par un panneau transparent, on prévoit par exemple un dispositif de guidage comportant un premier et un second rail de guidage montés fixes sur l'ensemble fixe (ou structure fixe) de la baie, de part et d'autre de l'ouverture fermée par le panneau mobile. Celui-ci est monté sur les rails, pour coulisser par exemple selon une direction longitudinale, dans un plan de coulissement entre une (ou plusieurs) position d'ouverture et une position intermédiaire de dégagement dans laquelle il est en regard du panneau fixe et dégagé de celle-ci.

On notera qu'il a été envisagé de déplacer la partie mobile entre la position d'obturation et la position intermédiaire de dégagement suivant principalement deux techniques :
- une première technique pour laquelle le déplacement de la partie mobile est une combinaison d'un mouvement dans une direction parallèle au plan de la partie fixe et d'un mouvement dans une direction perpendiculaire à ce plan, sous la forme d'un mouvement général de louvoiement, selon lequel le bord distal de la partie mobile se trouve, en fin de course, dans le plan de la baie (la partie mobile étant alors « en travers », entre le plan d'obturation et le plan de coulissement). Il suffit alors de ramener le bord proximal, par exemple manuellement, pour assurer l'obturation ; et
- une deuxième technique pour laquelle la partie mobile reste constamment dans un plan sensiblement parallèle au plan de la partie fixe lors de son déplacement.

L'invention se rapporte plus particulièrement à cette deuxième technique d'obturation, à ses variantes et ses perfectionnements.

Le Titulaire a en effet proposé une amélioration du guidage et du verrouillage de telles « baies flush », décrite notamment dans le document PCT/ EP2008/067264.

Selon cette approche, la baie flush comprend une structure fixe dans laquelle est définie une ouverture, et au moins un panneau coulissant, présentant un cadre portant au moins un pion de guidage (généralement deux pions en partie supérieure et deux pions en partie inférieure). Deux coulisseaux, ou navettes, solidaires des pions sont prévus, et assemblés de façon à permettre un mouvement relatif des coulisseaux par rapport à un élément de guidage correspondant, suivant l'axe de coulissement du panneau coulissant, de façon à permettre un déplacement dudit panneau coulissant suivant une direction perpendiculaire au plan de ladite structure fixe.

Ainsi, le panneau coulissant est solidarisé directement à un élément de guidage et à au moins un coulisseau, par l'intermédiaire des pions de guidage, guidés dans un chemin de rail de forme simple, sensiblement rectiligne, afin d'assurer sa mise en mobilité dans la direction de l'axe de coulissement ou perpendiculairement au plan de la structure fixe.

On notera que le terme « plan » doit ici s'entendre dans une acception élargie : le plan formé par la baie est parfois courbe, selon une, voire deux, directions (cela justifie également, dans certains cas, le terme « sensiblement» utilisé dans la description et les revendications).

Ce dispositif permet donc de faire reposer le panneau coulissant sur une surface élargie du rail, par l'intermédiaire de l'élément coulissant et du coulisseau et de mettre en œuvre des rails d'épaisseur réduite correspondant sensiblement à l'épaisseur du coulisseau ou de l'élément coulissant et/ou à l'épaisseur prévue pour le collage du rail sur la structure fixe.

Des améliorations à cette technique ont été présentées dans le document de brevet PCT/EP2010058752. Ces améliorations concernent notamment la mise en œuvre de moyens de synchronisation, permettant de synchroniser le déplacement des deux navettes, le cas échéant en agissant sur une seule d'entre elles. Un autre dispositif d'obturation de baie est présenté dans le document WO2007/139355.

### 3. Inconvénients des solutions de l'art antérieur

Ces techniques s'avèrent relativement efficaces, mais présentent cependant certains inconvénients, notamment en vue d'une mise en œuvre à l'échelle industrielle, notamment en termes de compacité, de complexité et/ou de fiabilité.

Notamment, dans certains modes de réalisation, l'encombrement en largeur des navettes peut poser problème, et par exemple empêcher, ou rendre complexe, la mise en œuvre d'autres fonctions nécessitant, par exemple, le passage d'un câble dans le rail.

Un autre inconvénient est que cette approche nécessite la mise en œuvre de moyens de verrouillage spécifiques, qui doivent être actionnés indépendamment (de façon motorisée ou manuellement) pour garantir le verrouillage du panneau mobile en position d'obturation.

### 4. Objectifs de l'invention

L'invention a donc notamment pour objectif de pallier les inconvénients de l'art antérieur cités ci-dessus.

Plus précisément, l'invention a notamment pour objectif de fournir une nouvelle technique de guidage d'un panneau mobile d'une baie d'obturation d'une structure, telle qu'un véhicule automobile ou similaire, permettant le passage d'une position d'obturation, affleurante avec le panneau fixe à une position de coulissement, qui soit simple, efficace et fiable.

L'invention à également l'objectif, au moins pour certains des modes de réalisation, de fournir une telle technique, permettant de mettre en œuvre de façon aisée d'autres fonctions dans un rail, ou utilisant un rail, sans augmenter l'encombrement de celui-ci, en particulier dans la largeur du véhicule (direction en Y).

Un autre objectif de l'invention, selon au moins certains modes de réalisation, est de fournir une telle technique, permettant d'assurer un verrouillage automatique (c'est-à-dire sans action spécifique supplémentaire) du panneau mobile, lorsque celui-ci est ramené dans sa position d'obturation.

### 5. Caractéristiques principales de l'invention, selon les modes de réalisation

Ces objectifs, ainsi que d'autres qui apparaîtront par la suite, sont atteints à l'aide d'un dispositif d'obturation d'une baie d'une structure selon la revendication 1, comprenant un panneau fixe fermant une première partie de ladite baie et un panneau mobile, pouvant fermer une ouverture correspondant à une deuxième partie de ladite baie, ledit panneau mobile étant guidé dans deux rails entre :
- une position d'obturation de ladite ouverture, dans un premier plan défini par ledit panneau fixe, dit plan d'obturation ; et
- une position de coulissement, dans un second plan, dit plan de coulissement, sensiblement parallèle audit plan d'obturation.
Selon l'invention, chacun desdits rails porte au moins une navette mobile en coulissement dans ledit rail, selon un axe de coulissement, et portant au moins un premier pion fixe, ledit premier pion fixe coopérant avec une gorge de contrôle du passage de ladite position d'obturation à ladite position de coulissement, et réciproquement, portée par un support solidaire d'un cadre dudit panneau mobile, le dispositif comprenant au moins un élément d'actionnement agissant sur l'un desdits premiers pions, de façon à le déplacer dans la gorge de contrôle avec laquelle il coopère.

Le déplacement de cet élément d'actionnement peut être manuel, via une poignée, ou motorisée, par exemple par l'intermédiaire d'un câble de commande. En agissant directement sur l'un des premiers pions, l'élément d'actionnement permet de modifier la position du panneau mobile da façon particulièrement simple, et sans qu'il soit nécessaire d'intégrer dans le rail des dispositifs d'actionnement pouvant agir sur la navette. Il est ainsi possible de réaliser un rail plus simple, et de dimension plus réduite.

Par ailleurs, la navette, mobile dans le rail, est particulièrement simple, et constitue un tout monobloc (c'est-à-dire sans élément mobile par rapport à un autre) mobile dans une seule direction, et dont l'encombrement peut être très réduit, notamment en largeur.

Avantageusement, l'action dudit élément d'actionnement sur ledit premier pion permet le passage dans ladite position de coulissement dudit panneau mobile, lorsque celui-ci est dans ladite position d'obturation.

Cet élément d'actionnement permet ainsi le passage facile d'une position de verrouillage, dans laquelle le panneau mobile ne peut pas être entraîné en coulissement, à une position dans laquelle l'utilisateur, ou un système de motorisation, peut entraîner directement ce panneau mobile en coulissement.

Dans un mode de réalisation particulier, ledit élément d'actionnement coopère avec au moins un moyen de rappel, tendant à ramener ledit panneau mobile dans ladite position d'obturation.

Ceci permet de mettre en œuvre un verrouillage simple et automatique, c'est-à-dire ne nécessitant pas d'autre opération que celle d'amener le panneau mobile dans la position d'obturation.

Ledit moyen de rappel peut notamment être monté entre une butée solidaire d'un cadre dudit panneau mobile et ledit élément d'actionnement.

Ceci permet, de façon simple et efficace, de disposer d'un verrouillage automatique.

Selon l'invention, ladite gorge présente au moins une première portion s'étendant transversalement, permettant le passage de ladite position d'obturation à ladite position de coulissement, et réciproquement, et une seconde portion de verrouillage s'étendant sensiblement parallèlement audit axe de coulissement.

L'inclinaison de la première portion est avantageusement de l'ordre de 45° par rapport à l'axe de coulissement, mais d'autres angles plus ou moins fermés sont possibles.

Notamment, deux supports peuvent être prévus, dans chaque rail, de façon à assurer une liaison efficace entre le panneau mobile et les navettes. Dans ce cas, ladite navette porte deux premiers pions correspondants.

Ces deux premiers pions peuvent notamment être portés par une tige ou un barreau guidé dans le rail. L'encombrement faible de cette tige ou de ce barreau, par rapport au rail, permet un gain d'espace appréciable dans le rail, permettant le cas échéant son utilisation pour d'autres fonctions.

Selon un mode de réalisation particulier, au moins un des supports porte un second pion, apte à coopérer avec une gâche correspondante formée dans ledit rail, dans ladite position d'obturation.

Selon un autre aspect particulier, le dispositif d'obturation peut comprendre des moyens de synchronisation, reliant les deux navettes équipant respectivement les deux rails, de façon que les deux navettes soient actionnées simultanément.

Ces moyens de synchronisation peuvent par exemple comprendre un câble ou un clinquant.

Dans une première approche, le dispositif peut former un pavillon vitré ou une portion d'un pavillon vitré.

Dans une autre approche, il peut être monté sur une portière ou une portion latérale de carrosserie.

L'invention concerne également les véhicules automobiles comprenant au moins un dispositif d'obturation tel que décrit ci-dessus. Ce dispositif peut notamment être monté sur une paroi latérale du véhicule ou une portière, ou former tout ou partie d'un pavillon.

Le terme « véhicule » automobile s'entend ici dans un sens large, et englobe notamment les camions, les camionnettes, cars, camping-cars,... Un tel dispositif d'obturation peut également être adapté sur d'autres structures présentant des contraintes similaires, telles que les caravanes, les « mobile homes », les bateaux...

### 6. Liste des figures

D'autres caractéristiques et avantages de l'invention apparaîtront plus clairement à la lecture de la description suivante d'un mode de réalisation particulier de l'invention, donné à titre de simple exemple illustratif et non limitatif, et des dessins annexés, parmi lesquels :
- les figures 1A et 1B illustrent, dans une représentation en perspective, un mode de réalisation d'un dispositif d'obturation tel que décrit dans le document PCT/EP2008/067264, respectivement en position d'obturation de l'ouverture et dans une position d'ouverture partielle ;
- la figure 2 est une vue schématique d'un exemple de navette selon l'invention, apte à coulisser dans un rail de guidage ;
- la figure 3 présente, également de façon schématique, un exemple de support présentant une gorge destinée à coopérer avec l'un des pions de la navette de la figure 2 ;
- la figure 4 illustre la navette de la figure 2 et le support de la figure 3 assemblés, ainsi que un élément d'actionnement associé ;
- les figures 5A à 5D illustrent, en vue de dessus, les positions relatives d'un support de la figure 3 et de la navette de la figure 2, respectivement en :

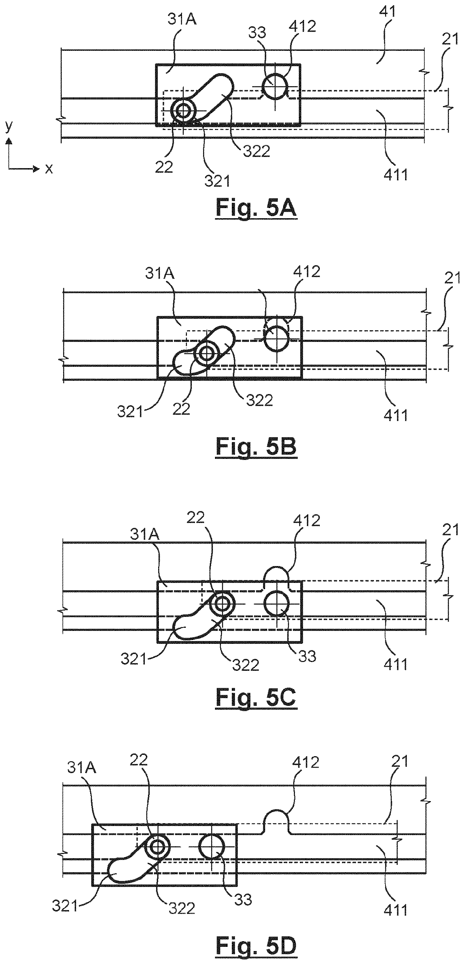

   - figure 5A : position d'obturation ;
   - figure 5B: première position en cours d'ouverture (à demi ouvert) ;
   - figure 5C : deuxième position en cours d'ouverture (panneau mobile dans le plan de coulissement) ;
   - figure 5D : position ouverte, le panneau mobile se trouvant dans en coulissement.

### 7. Description d'un mode de réalisation particulier

L'invention propose donc une nouvelle approche du guidage d'un panneau mobile pour un dispositif d'obturation destiné à un véhicule automobile (ou à une structure présentant des caractéristiques similaires, en ce qui concerne les baies, tels que les caravanes, mobile homes, les bateaux,...) et notamment pour le dispositif connu sous le terme de « baie flush », distribué notamment par le Titulaire de la présente demande.

Selon cette approche, une navette est guidée en coulissement dans un rail prévu à cet effet, parallèlement à un axe de coulissement défini par ce rail. Ainsi, cette navette se déplace selon une direction unique (classiquement selon un axe parallèle à l'axe X, c'est-à-dire l'axe correspondant à la longueur du véhicule). Cette navette porte au moins un, et notamment deux, dans le mode de réalisation illustrée, pions, qui se déplacent donc également uniquement selon l'axe de coulissement.

Le panneau mobile porte, quant à lui, deux gorges (qui peuvent être selon les cas des lumières ou des rainures, par exemple), prévues pour coopérer avec chacun des pions de la navette, pour contrôler la fermeture et l'ouverture du panneau mobile, c'est-à-dire son déplacement dans une direction perpendiculaire à l'axe de coulissement (classiquement l'axe Y du véhicule, correspondant à sa largeur, ou l'axe Z, correspondant à la hauteur, dans le cas des pavillons).

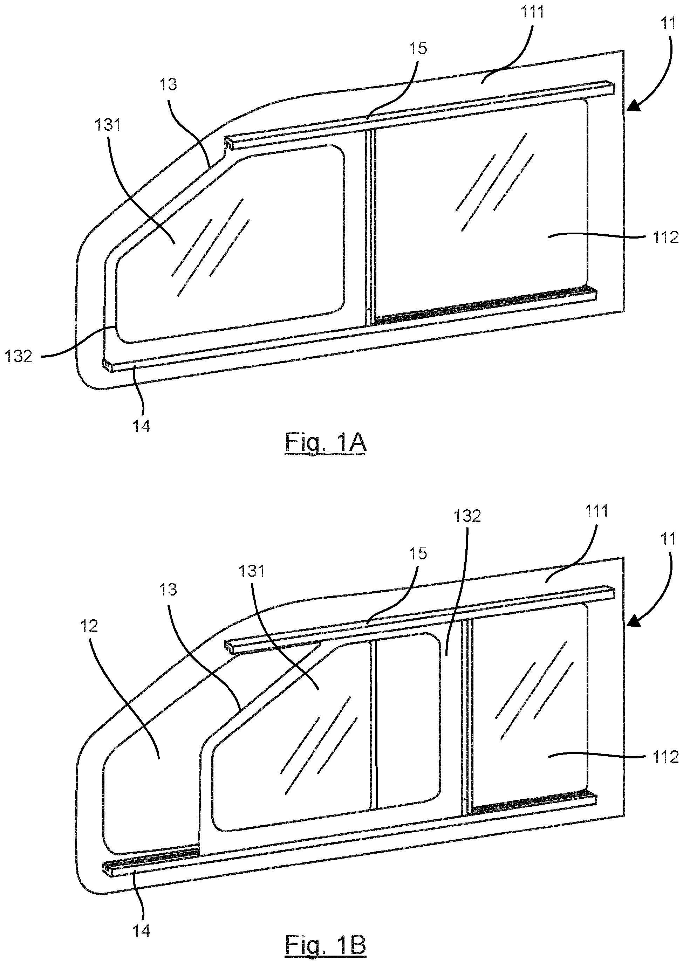

Les figures 1A et 1B illustrent, dans une vue en perspective, un mode de réalisation d'une telle baie flush à ouverture manuelle, destiné à obturer une baie ménagée dans une paroi latérale de la carrosserie d'un véhicule. Cet exemple est non limitatif, une telle baie flush pouvant être ménagée dans la structure d'une caravane ou d'un camping-car par exemple.

Ce dispositif d'obturation comprend donc une partie fixe 11, généralement en matériau transparent, encore appelée ensemble fixe ou panneau fixe, dans laquelle est percée une ouverture 12. Un panneau coulissant 13 mobile par rapport à ce panneau fixe 11, permettant d'obturer complètement l'ouverture (voir figure 1A), est prévu pour coulisser et libérer partiellement (voir figure 1B) ou totalement cette ouverture.

Dans le cas des pavillons notamment, l'ouverture peut ne pas être formée dans le panneau fixe, qui s'étend alors à côté de l'ouverture (et du panneau mobile, dans la position d'obturation).

Le panneau coulissant comprend une vitre 131 munie d'un cadre 132, pouvant être guidé le long de deux rails sensiblement parallèles 14 et 15, montés sur la face intérieure du panneau fixe 11 respectivement en partie inférieure et en partie supérieure. Dans une variante, ces rails peuvent également être non parallèles.

La partie fixe 11 peut être réalisée en plusieurs parties, ici en deux parties, une première partie 111 définissant le contour de la baie, généralement dans un matériau au moins partiellement opaque ou sérigraphié, et présentant une forme adaptée aux besoins, par exemple sensiblement trapézoïdale, ou rectangulaire, et une partie 112, transparente et fixe, inscrite dans une seconde ouverture définie dans la première partie.

Les figures 1A et 1B illustrent la baie vue de l'intérieur du véhicule. Sur cette surface de la partie fixe 11 orientée vers l'intérieur sont montés, par exemple par collage, les deux rails de guidage et de maintien 14 et 15 du panneau 13 mobile en coulissement par rapport à la partie fixe 11. Le rail supérieur 15 et le rail inférieur 14 peuvent le cas échéant ne pas être parallèles, pour suivre sensiblement les contours de la partie fixe 11 (eux-mêmes généralement imposés par la forme de carrosserie du véhicule).

Le rail inférieur 14 peut notamment être équipé de moyens de récupération et d'évacuation de l'eau. Le rail supérieur 15 peut être recouvert d'un bandeau de protection et de maintien, par exemple du type décrit dans le document FR-0857313.

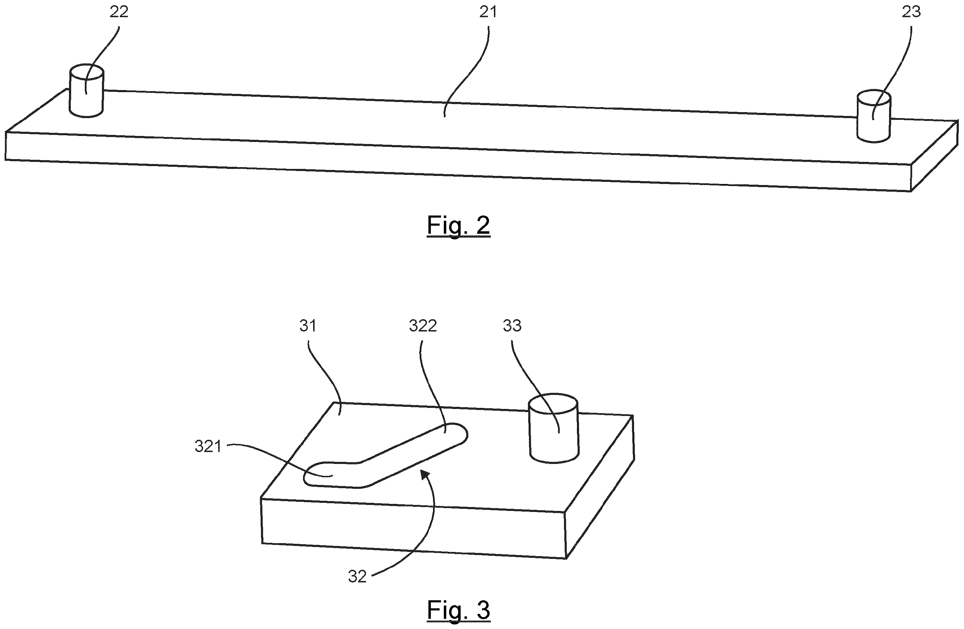

La figure 2 illustre schématiquement une navette selon l'approche de l'invention. Elle est destinée à se déplacer dans le rail inférieur 14. Une navette similaire, de préférence synchronisée, est généralement prévue dans le rail supérieur.

Cette navette est essentiellement formée d'un barreau 21 portant deux pions fixes 22 et 23 par rapport à ce barreau 21. La section du barreau 21 est adaptée pour coulisser dans une glissière correspondante du rail. Cette section peut être quelconque, dès lors qu'elle permet un coulissement et un guidage efficaces. Il peut notamment s'agir également d'une tige, et plus généralement de toutes formes de préférence de largeur relativement réduite, par rapport à la largeur du rail, pour laisser dans celui-ci une place libre pour d'autres fonctions (par exemple en permettant le passage d'un câble).

La figure 3 illustre l'un des deux supports 31 solidarisés au cadre mobile 132 (où le cas échéant formé dans celui-ci) et prévue pour coopérer avec les pions 22 et 23, pour contrôler le déplacement du panneau mobile en louvoiement, entre la position d'obturation et la position de coulissement, et réciproquement.

Une gorge 32 est formée dans le support, dans lequel le pion 22 peut se déplacer. Selon un autre mode de réalisation, ces supports sont intégrés directement dans le cadre du panneau mobile, et les gorges sont formés dans ce cadre.

Cette gorge comprend une partie d'extrémité 321, s'étendant parallèlement à l'axe de coulissement (axe défini par le barreau 21), et correspond à la position d'obturation. Elle comprend également une portion inclinée 322 formant, par rapport à cet axe de coulissement, un angle de l'ordre de 45°. Cette portion 322 permet de contrôler le changement de position du panneau mobile. D'autres angles, et le cas échéant des formes légèrement différentes, par exemple incurvées, peuvent être envisagées.

Selon les cas, cette gorge peut être traversante, ou une rainure formée dans le support 31.

Ce support porte par ailleurs un pion de verrouillage 33, permettant d'assurer le verrouillage du panneau mobile dans sa position d'obturation, comme expliqué par la suite.

Deux supports tels qu'illustrés sur la figure 3 sont prévus, pour coopérer respectivement avec chacun des pions 22 et 23 de la navette illustrée en figure 2. Cependant, de préférence, une seule de ces pièces porte un pion de verrouillage 33.

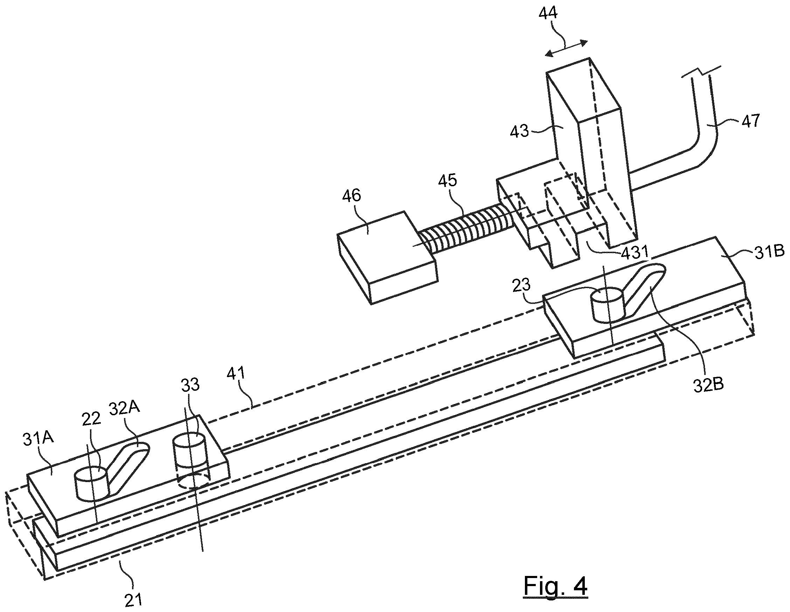

Comme cela apparaît plus clairement sur la figure 4, qui présente ces supports assemblés avec la navette, le barreau 21 de cette dernière est monté dans un rail 41, et le panneau mobile (dont seuls les supports 31_{A} et 31_{B} sont illustrés) est monté de façon que les gorges 32_{A} et 32_{B} coopèrent respectivement avec les pions 22 et 23.

On peut noter, sur cette figure 4, que la largeur des supports 31_{A}, 31_{B} est sensiblement égale à la largeur du rail 41 (cette largeur étant nécessaire pour contrôler le déplacement du panneau mobile parallèlement à l'axe de coulissement, mais que le barreau 21 est de largeur sensiblement inférieure, laissant de l'espace disponible dans le rail, derrière ce barreau.

D'une façon générale, il est précisé que les dimensions des pièces illustrées, et les rapports entre ces dimensions, sont indicatifs, et parfois exagérés pour rendre les dessins plus lisibles. L'homme du métier saura les adapter, en fonction des contraintes.

Un élément d'actionnement 43 est monté sur le panneau mobile, de façon mobile par rapport au cadre de ce panneau mobile, pour permettre le contrôle de l'ouverture et de la fermeture de celui-ci (de façon manuelle ou motorisée, selon les cas). Cet élément d'actionnement 43 est donc déplaçable, dans une direction parallèle à l'axe de coulissement (flèche 44).

Il présente une rainure 431, s'étendant perpendiculairement à l'axe de coulissement, et venant chevaucher la partie supérieure du pion 23 (sur la figure 4, pour faciliter la lecture, l'élément d'actionnement 43 est présenté en éclaté, au-dessus du pion. En pratique, bien sûr, le pion 23 pénètre dans la rainure 431).

On comprend qu'ainsi, lorsque l'élément d'actionnement 43 est déplacé selon la flèche 44, le pion 23 se déplace dans la gorge 32_{B}. Ceci entraîne un léger déplacement de la navette dans le rail (selon l'axe X du véhicule, par exemple) et simultanément un décalage du panneau mobile (selon la direction Y par exemple), entre les positions d'obturation et les positions de coulissement. En effet, le support 31 B est déplacé transversalement, par rapport au barreau 21. Il en est de même du support 31_{A}, qui est lié au support 31_{B}, par l'intermédiaire du cadre du panneau mobile, et qui est entraîné par le pion 22, qui reproduit le déplacement du pion 23.

Un moyen de rappel 45, ici sous la forme d'un ressort hélicoïdal, est placé entre l'élément d'actionnement 43 et une butée 46, fixe par rapport au cadre du panneau mobile. Ce ressort permet d'assurer un verrouillage automatique (c'est-à-dire sans opération spécifique de verrouillage autre que l'action de ramener le panneau mobile dans la position d'obturation).

Les figures 5A à 5D illustrent différentes positions du support 31_{A} par rapport au pion 22 et au rail 41. Ces figures sont représentées schématiquement, en vue de dessus.

Comme on le voit sur ces figures 5A à 5D, le pion 22 (plus généralement le barreau 21, et donc la navette) est mobile dans une glissière 411, formé dans le rail 41. Le déplacement de ce pion 22, et donc de la navette (représentée partiellement par le barreau 21), se déplace uniquement selon la direction X. On dispose ainsi d'un système simple à mettre en œuvre, et fiable dans le temps. Le support 31_{A}, et donc le cadre mobile auquel il est relié, se déplacent quant à eux dans les deux directions X et Y.

La figure 5A présente la position d'obturation, dans laquelle le panneau mobile se trouve dans le plan du panneau fixe (voir figure 1A). Dans cette position, le pion 22 de la navette se trouve dans la portion d'extrémité 321 de la gorge, et le pion de verrouillage 33, qui est solidaire du support 31A est logé dans une gâche 412 formée sur le rail 41. Le support 31_{A} est donc immobilisé, selon la direction X. L'élément d'actionnement 43, coopérant avec le ressort 45, sur le maintien de cette position verrouillée, en l'absence d'une manœuvre spécifique (manuelle ou motorisée). Il n'est notamment pas possible d'ouvrir le panneau mobile, depuis l'extérieur. Cette manœuvre peut, par exemple être assurée via celle-ci peut être un bouton ressort ou une poignée de porte. Un câble 47, intégré au cadre du panneau mobile, peut permettre de transmettre l'action de déverrouillage à l'autre navette.

Pour ouvrir le panneau mobile, on doit donc agir sur l'élément d'actionnement 43. Cet actionnement peut être direct, via une poignée ou un élément de préhension solidaire de cet élément d'actionnement, ou assuré par un élément de préhension déportée, par exemple selon les variantes décrites dans la demande de brevet PCT/EP2008/067264, déjà mentionné. Ce déplacement peut également être motorisé, par exemple via un motoréducteur, contrôlant le déplacement des deux éléments d'actionnement de chacun des rails.

Sur la figure 5B, on a représenté le support 31_{A} dans une position correspondant à une ouverture partielle (sensiblement un tiers du déplacement d'ouverture). L'élément d'actionnement 43 a déplacé le pion 23 dans la gorge 32_{B} (voir figure 4). Par l'intermédiaire du barreau 21, le pion 22 s'est déplacé de la même façon, et se trouve donc dans la partie transversale 322 de la gorge. De ce fait, le support 31A, et donc le panneau mobile, s'est déplacé selon la direction Y, et le pion de verrouillage 33 a commencé à se dégager de la gâche 412.

Sur la figure 5C, l'ouverture est terminée, et le panneau mobile se trouve dans le plan de coulissement. Ainsi, le pion 22 se trouve en butée dans la portion 322 de la gorge, et le pion de verrouillage 33 est complètement dégagé de la gâche 412.

Dans cette position, le support 31_{A}, et donc le panneau mobile, peut être déplacé en coulissement, selon la direction X, sous l'action du déplacement de la navette. Le coulissement permet de déplacer le panneau mobile jusqu'à une position d'ouverture maximale. Il est bien sûr possible de le placer dans des positions d'ouvertures intermédiaires (un frottement, par exemple entre le pion de verrouillage et un bord du rail pouvant être exploité pour immobiliser le panneau mobile dans une telle position intermédiaire).

Le passage d'une position ouverte à la position d'obturation se fait de façon symétrique (de la figure 5D à la figure 5A).

Préférentiellement, le contrôle du déplacement du panneau mobile 13 est optimisé à l'aide de moyens de synchronisation, par exemple du type de ceux décrits dans le document PCT/EP2010058752 déjà mentionné. Le terme « synchronisation » indique que ces moyens assurent que le déplacement des navettes supérieures et inférieures est effectué de façon synchronisée, comme détaillé ci-après, sous l'action d'une commande unique. L'invention peut également être mise en œuvre, bien sûr, en l'absence de tels moyens de synchronisation.

Selon certains modes de réalisation, les moyens de synchronisation permettent également d'optimiser le freinage ou le blocage du panneau coulissant en toute position d'ouverture.

Le modes de réalisation décrit ci-dessus s'applique à une paroi latérale ou une portière d'un véhicule automobile. Il est bien sûr possible de l'adapter à un toit ouvrant. Il est également évident que l'invention peut s'appliquer de la même façon à d'autres structures présentant une paroi dans laquelle est définie une baie, comme, par exemple, une caravane ou un camping-car.

## Revendications

1. Dispositif d'obturation d'une baie d'une structure, comprenant un panneau fixe (11) fermant une première partie de ladite baie et un panneau mobile (13), pouvant fermer une ouverture correspondant à une deuxième partie de ladite baie (12), ledit panneau mobile (13) étant guidé dans deux rails (14, 15) entre :
- une position d'obturation de ladite ouverture, dans un premier plan défini par ledit panneau fixe (11), dit plan d'obturation ; et
- une position de coulissement, dans un second plan, dit plan de coulissement, sensiblement parallèle audit plan d'obturation,
chacun desdits rails (14, 15) portant au moins une navette mobile en coulissement dans ledit rail (14, 15), selon un axe de coulissement, et portant au moins un premier pion fixe (22, 23), ledit premier pion fixe (22, 23) coopérant avec une gorge de contrôle (32A, 32B) du passage de ladite position d'obturation à ladite position de coulissement, et réciproquement,
ladite gorge étant portée par un support (31A, 31B) solidaire d'un cadre (132) dudit panneau mobile (13) et présentant au moins une première portion (322) s'étendant transversalement, permettant le passage de ladite position d'obturation à ladite position de coulissement, et réciproquement, et une seconde portion (321) de verrouillage s'étendant sensiblement parallèlement audit axe de coulissement,
le dispositif comprenant au moins un élément d'actionnement (43) monté sur ledit panneau mobile (13) et mobile par rapport au cadre de ce panneau mobile dans une direction parallèle audit axe de coulissement (44), **caractérisé en ce que** ledit élément d'actionnement présente une rainure (431) s'étendant perpendiculairement audit axe de coulissement (44) et venant chevaucher une partie supérieure de l'un desdits premiers pions (22, 23) de sorte que ledit élément d'actionnement (43) agit directement sur l'un desdits premiers pions (22, 23), de façon à le déplacer dans la gorge de contrôle (32A, 32B) avec laquelle il coopère.

2. Dispositif d'obturation selon la revendication 1, **caractérisé en ce que** l'action dudit élément d'actionnement (43) sur ledit premier pion (22, 23) permet le passage dans ladite position de coulissement dudit panneau mobile (23), lorsque celui-ci est dans ladite position d'obturation.

3. Dispositif d'obturation selon la revendication 2, **caractérisé en ce que** ledit élément d'actionnement (43) coopère avec au moins un moyen de rappel (45), tendant à ramener ledit panneau mobile (13) dans ladite position d'obturation.

4. Dispositif d'obturation selon la revendication 3, **caractérisé en ce que** ledit moyen de rappel (45) est monté entre une butée (46) solidaire dudit cadre (132) dudit panneau mobile (13) et ledit élément d'actionnement (43).

5. Dispositif d'obturation selon l'une quelconque des revendications 1 à 4, **caractérisé en ce qu'**au moins un des supports (31A, 31B) porte un second pion (33), apte à coopérer avec une gâche (412) correspondante formée dans ledit rail (14, 15), dans ladite position d'obturation.

6. Dispositif d'obturation selon l'une quelconque des revendications 1 à 5, **caractérisé en ce que** ladite navette porte deux premiers pions (22, 23).

7. Dispositif d'obturation selon la revendication 6, **caractérisé en ce que** lesdits deux premiers pions (22, 23) sont portés par une tige (21) ou un barreau guidé dans le rail (14, 15).

8. Dispositif d'obturation selon l'une quelconque des revendications 1 à 7, **caractérisé en ce qu'**il comprend des moyens de synchronisation, reliant les deux navettes équipant respectivement les deux rails (14, 15), de façon que les deux navettes soient actionnées simultanément.

9. Dispositif d'obturation selon la revendication 8, **caractérisé en ce que** lesdits moyens de synchronisation comprennent au moins un câble (47) ou un clinquant.

10. Dispositif d'obturation selon l'une quelconque des revendications 1 à 9, **caractérisé en ce qu'**il forme un pavillon vitré ou une portion d'un pavillon vitré.

11. Dispositif d'obturation selon l'une quelconque des revendications 1 à 9, **caractérisé en ce qu'**il est monté sur une portière ou une portion latérale de carrosserie.

12. Véhicule automobile **caractérisé en ce qu'**il comprend au moins un dispositif d'obturation selon l'une quelconque des revendications 1 à 11.

## Patentansprüche

1. Schließvorrichtung einer Öffnung einer Struktur, umfassend eine feste Platte (11), die einen ersten Teil der Öffnung verschließt, und eine bewegliche Platte (13), die eine Ausnehmung entsprechend einem zweiten Teil der Öffnung (12) verschließen kann, wobei die bewegliche Platte (13) in zwei Schienen (14, 15) geführt wird zwischen:
- einer Schließposition der Öffnung in einer ersten Ebene, die durch die feste Platte (11) definiert ist, Schließebene genannt, und
- einer Gleitposition in einer zweiten Ebene, Gleitebene genannt, im Wesentlichen parallel zur Schließebene,
wobei jede der Schienen (14, 15) mindestens einen gleitend in der Schiene (14, 15) entlang einer Gleitachse beweglichen Schlitten trägt und mindestens einen ersten festen Stift (22, 23) umfasst, wobei der erste feste Stift (22, 23) mit einer Nut (32A, 32B) zur Steuerung des Übergangs von der Schließposition in die Gleitposition und umgekehrt zusammenwirkt,
wobei die Nut von einem Träger (31A, 31B) getragen wird, der mit einem Rahmen (132) der beweglichen Platte (13) verbunden ist und mindestens einen ersten Abschnitt (322), der sich quer erstreckt und den Übergang von der Schließposition in die Gleitposition und umgekehrt ermöglicht, und einen zweiten Abschnitt (321) zur Verriegelung umfasst, der sich im Wesentlichen parallel zur Gleitachse erstreckt,
wobei die Vorrichtung mindestens ein Betätigungselement (43) umfasst, das auf der beweglichen platte (13) montiert und in Bezug zum Rahmen dieser beweglichen Platte in eine Richtung parallel zur Gleitachse (44) beweglich ist,
**dadurch gekennzeichnet, dass** das Betätigungselement eine Rille (431) aufweist, die sich senkrecht auf die Gleitachse (44) erstreckt und einen oberen Teil eines der ersten Stifte (22, 23) überschneidet, so dass das Betätigungselement (43) direkt auf einen der ersten Stifte (22, 23) einwirkt, um diesen in der Steuernut (32A, 32B), mit der er zusammenwirkt, zu verschieben.

2. Schließvorrichtung nach Anspruch 1, **dadurch gekennzeichnet, dass** die Wirkung des Betätigungselements (43) auf den ersten Stift (22, 23) den Übergang der beweglichen Platte (23) in die Gleitposition ermöglicht, wenn sich diese in der Schließposition befindet.

3. Schließvorrichtung nach Anspruch 2, **dadurch gekennzeichnet, dass** das Betätigungselement (43) mit mindestens einem Rückstellmittel (45) zusammenwirkt, das dazu neigt, die bewegliche Platte (13) wieder in die Schließposition zu bringen.

4. Schließvorrichtung nach Anspruch 3, **dadurch gekennzeichnet, dass** das Rückstellmittel (45) zwischen einem mit dem Rahmen (132) der beweglichen Platte (13) montierten Anschlag (46) und dem Betätigungselement (43) montiert ist.

5. Schließvorrichtung nach einem der Ansprüche 1 bis 4, **dadurch gekennzeichnet, dass** mindestens einer der Träger (31A, 31B) einen zweiten Stift (33) trägt, der geeignet ist, mit einem entsprechenden Schließblech (412), da in der Schiene (14, 15) ausgebildet ist, in der Schließposition zusammenzuwirken.

6. Schließvorrichtung nach einem der Ansprüche 1 bis 5, **dadurch gekennzeichnet, dass** der Schlitten zwei erste Stifte (22, 23) trägt.

7. Schließvorrichtung nach Anspruch 6, **dadurch gekennzeichnet, dass** die zwei ersten Stifte (22, 23) von einer Stange (21) oder einem in der Schiene (14, 15) geführten Stab getragen werden.

8. Schließvorrichtung nach einem der Ansprüche 1 bis 7, **dadurch gekennzeichnet, dass** sie Synchronisierungsmittel umfasst, die die zwei Schlitten, mit denen die zwei Schienen (14, 15) jeweils ausgestattet sind, verbinden, so dass die zwei Schlitten gleichzeitig betätigt werden.

9. Schließvorrichtung nach Anspruch 8, **dadurch gekennzeichnet, dass** die Synchronisierungsmittel mindestens ein Kabel (47) oder eine Metallfolie umfassen.

10. Schließvorrichtung nach einem der Ansprüche 1 bis 9, **dadurch gekennzeichnet, dass** sie einen Glaspavillon oder einen Abschnitt eines Glaspavillons bildet.

11. Schließvorrichtung nach einem der Ansprüche 1 bis 9, **dadurch gekennzeichnet, dass** sie auf einer Tür oder einem seitlichen Karosserieabschnitt montiert ist.

12. Kraftfahrzeug, **dadurch gekennzeichnet, dass** es mindestens eine Schließvorrichtung nach einem der Ansprüche 1 bis 11 umfasst.

## Claims

1. Device for closing an opening of a structure, comprising a fixed panel (11) closing a first part of said opening and a movable panel (13), capable of closing an opening corresponding to a second part of said opening (12), said movable panel (13) being guided in two rails (14, 15) between:
- a closing position of said opening, in a first plane defined by said fixed panel (11), referred to as a closing plane; and
- a sliding position, in a second plane, referred to as a sliding plane, substantially parallel to said closing plane,
each of said rails (14, 15) carries at least one movable shuttle sliding in said rail (14, 15), along a sliding axis, and carrying at least one first fixed pin (22, 23), said first fixed pin (22, 23) cooperating with a control groove (32A, 32B) for the passage from said closing position to said sliding position, and vice versa,
said groove being carried by a support (31A, 31B) secured to a frame (132) of said movable panel (13) and having at least one first portion (322) extending transversely, allowing a passage from said closing position to said sliding position, and vice versa, and a second portion (321) locking extending substantially parallel to said sliding axis,
the device comprising at least one actuating element (43) mounted on said movable panel (13) and movable with respect to the frame of this movable panel in a direction parallel to said sliding axis (44), **characterised in that** said actuating element has a slot (431) extending perpendicularly to said sliding axis (44) and overlapping an upper part of one of said first pins (22, 23), such that the actuating element (43) acts directly on one of said first pins (22, 23), so as to move it into the control groove (32A, 32B) with which it cooperates.

2. Closing device according to claim 1, **characterised in that** the action of said actuating element (43) on said first pin (22, 23) allows the passage in said sliding position of said movable panel (23), when the latter is in said closing position.

3. Closing device according to claim 2, **characterised in that** said actuating element (43) cooperates with at least one return means (45), tending to return said movable panel (13) into said closing position.

4. Closing device according to claim 3, **characterised in that** said return means (45) is mounted between a stop (46) secured to said frame (132) of said movable panel (13) and said actuating element (43).

5. Closing device according to any one of claims 1 to 4, **characterised in that** at least one of the supports (31A, 31B) carries a second pin (33), capable of cooperating with a corresponding striker (412) formed in said rail (14, 15), in said closing position.

6. Closing device according to any one of claims 1 to 5, **characterised in that** said shuttle carries two first pins (22, 23).

7. Closing device according to claim 6, **characterised in that** said two first pins (22,23) are carried by a rod (21) or a bar guided in the rail (14, 15).

8. Closing device according to any one of claims 1 to 7, **characterised in that** it comprises synchronisation means, connecting the two shuttles respectively equipping the two rails (14, 15), so that the two shuttles are actuated simultaneously.

9. Closing device according to claim 8, **characterised in that** said synchronisation means comprise at least one cable (47) or a foil.

10. Closing device according to any one of claims 1 to 9, **characterised in that** it forms a glazed roof or a portion of a glazed roof.

11. Closing device according to any one of claims 1 to 9, **characterised in that** it is mounted on a door or a lateral body portion.

12. Motor vehicle **characterised in that** it comprises at least one closing device according to any one of claims 1 to 11.
